# EUROPÄISCHE PATENTSCHRIFT

(11) **EP 2 467 276 B1**
(45) Veröffentlichungstag und Bekanntmachung des Hinweises auf die Patenterteilung: **03.07.2013**
(21) Anmeldenummer: 10747163.3
(22) Anmeldetag: 05.08.2010
(51) Int. Cl.: B60K 1/04, B60L 11/18, B60S 5/06, H01M 2/10

(54) **ENERGIESPEICHERANORDNUNG FÜR EIN KRAFTFAHRZEUG**
ENERGY ACCUMULATOR ARRANGEMENT FOR A MOTOR VEHICLE
AGENCEMENT D'ACCUMULATEURS D'ÉNERGIE POUR UN VÉHICULE À MOTEUR

(30) Priorität: 18.08.2009 DE 102009037870
(43) Veröffentlichungstag der Anmeldung: 27.06.2012
(73) Patentinhaber: Volkswagen Aktiengesellschaft, 38440 Wolfsburg (DE)
(72) Erfinder: GILDEMANN, Dirk, 38444 Wolfsburg (DE); JÄSCHKE, Dirk, 38446 Wolfsburg (DE)
(86) Internationale Anmeldenummer: PCT/EP2010/004806
(87) Internationale Veröffentlichungsnummer: WO 2011/020565

(56) Entgegenhaltungen:
- AU-B2- 604 321
- US-A- 5 373 910
- US-A1- 2009 186 266

## Beschreibung

Die Erfindung betrifft eine Energiespeicheranordnung für ein Kraftfahrzeug, insbesondere ein Elektrofahrzeug, mit zumindest zwei Batteriekästen nach dem Oberbegriff des Patentanspruches 1 und ein Verfahren zur Anordnung eines derartigen Energiespeichers nach dem Oberbegriff des Patentanspruches 7.

Heutzutage, um auf eine für eine akzeptable Reichweite ausreichende Anzahl von Batteriezellen für ein Elektrofahrzeug (E-Fahrzeug) zu kommen, wird der elektrische Energiespeicher eines Elektrofahrzeugs aus zwei oder mehreren miteinander verbundenen Batteriekästen aufgebaut. Die Batteriekästen umfassen jeweils mindestens eine Batterie. Dabei befindet sich ein Batteriekasten in der Regel vor der hinteren Achse des Fahrzeugs, während der zweite Batteriekasten je nach der Achsenkonstruktion hinter oder über der Achse - zum Beispiel hinter einer Verbundlenkerachse oder über einer Koppellenkerachse oder Mehrlenkerachse - angeordnet wird. Aus Gründen der Sicherheit, der Verdrahtung und der Klimatisierung ist in dem Fall ein zusammenhängender Batteriekasten sinnvoll. Ab einer gewissen Batteriekastengröße ist ein Wechsel der kompletten Batterie aus dem Fahrzeug dann sehr aufwendig, weil der Batteriekasten zum Teil über der Radachse zum Beispiel im Kofferraum und auch zum Teil unter der Radachse zum Beispiel unter einem Autositz angeordnet wird. Ein Batteriewechsel eines derartigen einteiligen Batteriekastens setzt voraus, die Radachse des Fahrzeugs zuerst auszubauen. Daraus resultiert ein hoher Aufwand bei Montagen, Wartungs- oder Instanzarbeit bzw. Service.

In DE 40 27 147 A1 ist eine Vorrichtung bestehend aus zwei Batteriekästen zur Kopplung der Steuerung und batterie-elektrischen Versorgungen von Antriebsmotoren einer Lokomotive bekannt, wobei die Batteriekastenanschlüsse über einen Steuerkasten miteinander in elektrischer Verbindung stehen.

DE 25 58 456 offenbart einen Energiespeicher für Elektrotraktion, insbesondere Elektrofahrzeuge, mit mehreren separat handhabbaren Batterieuntereinheiten, die durch ein Verbindungsteil mit Steckkontakten miteinander verbunden sind.

Aus der US 5 373 910 A ist eine gattungsgemäße Energiespeicheranordnung für ein Kraftfahrzeug bekannt. Die Energiespeicheranordnung weist zwei Batteriekästen auf, in denen jeweils eine Akkumulatorbatterie vorgesehen ist. Die beiden Batteriekästen sind über ein Verbindungsteil miteinander mechanisch verbunden. Gleiches trifft auch auf die AU 604 321 B2 zu, aus der ein elektrisch betriebener Rollstuhl bekannt ist, der zwei Batteriekästen aufweist. Der Erfindung liegt die Aufgabe zu Grunde, die Energiespeichereinheit eines Fahrzeugs, insbesondere eines Elektrofahrzeugs, flexibel leicht zu montieren und zu demontieren.

Diese Aufgabe wird erfindungsgemäß durch eine Energiespeicheranordnung für ein Kraftfahrzeug, insbesondere ein Elektrofahrzeug, mit den Merkmalen des Patentanspruchs 1 und ein Verfahren zur Anordnung eines derartigen Energiespeichers mit den Merkmalen des Patentanspruchs 7 gelöst. Die abhängigen Ansprüche betreffen vorteilhafte Weiterbildungen und Ausgestaltungen der Erfindung.

Der Erfindung liegt die Idee zugrunde, die Energiespeichereinheiten trennbar in Modulen aufzubauen, damit erhöht man die Möglichkeit, die Module in einem Kraftfahrzeug flexibel anzuordnen. Eine Energiespeicheranordnung wird für ein Kraftfahrzeug, insbesondere ein Elektrofahrzeug, mit zumindest zwei Batteriekästen, die jeweils zumindest eine Akkumulatorenbatterie aufnehmen, vorgesehen, wobei die zwei Akkumulatorenbatterien miteinander elektrisch verschaltet werden, wenn die zwei Batteriekästen über ein Verbindungsteil miteinander mechanisch verbunden sind, wobei das Verbindungsteil seitlich neben einer oder über einer Radachse des Kraftfahrzeugs angeordnet ist, wobei mindestens ein erster Batteriekasten vom Verbindungsteil trennbar derart ausgestaltet ist, dass die Batteriekästen unabhängig voneinander montierbar und/oder demontierbar sind. Mittels des Verbindungsteils ermöglicht eine mechanische Verbindung für die Batteriekästen derart, dass die zwei verbundenen Batteriekästen wieder zu einem geschlossenen System gemacht und nach außen abgedichtet werden. Mit diesem Aufbau wird eine hohe Flexibilität bei der Wartung bzw. Instandhaltung der Batterien geschafft, damit die Batteriekästen unabhängig voneinander ab- und aufgebaut werden können, ohne die Radachse des Fahrzeugs vorab auszubauen. Außerdem kann ein Batteriekasten auch in den Fahrzeuginnenraum montiert werden.

Gemäß einer vorteilhaften Weiterbindung der Erfindung wird das Verbindungsteil flexibel biegbar ausgestaltet. Das Verbindungsteil besteht aus einem elastischen Material, zum Beispiel aus Kunststoff oder Gummi und kann zum Beispiel in Form von Schlauch ausgebildet werden. Das Verbindungsteil kann auch bei der Montage zusammengefaltet werden. Somit kann die Energiespeicheranordnung Hindernisse leicht umgehen und die Kontur des Fahrzeugs besser anpassen. Die erleichtert die Arbeit insbesondere beim Montieren und Demontierung der Batteriekästen.

Gemäß einer vorteilhaften Ausgestaltung der Erfindung kann die Energiespeicheranordnung auch zweiteilig aufgebaut werden, wobei ein zweiter Batteriekasten mit dem Verbindungsteil fest ausgestaltet wird. In dem Fall ist in der Energiespeicheranordnung nur noch eine Schnittstelle oder ein Anschluss zur Verbindung des ersten Batteriekastens mit dem Verbindungsteil notwendig. Daher kann die Energiespeicheranordnung vereinfacht werden und die Aufbaukosten der gesamten Energiespeicheranordnung reduziert werden.

Gemäß einer alternativen vorteilhaften Ausgestaltung der Erfindung wird das Verbindungsteil als ein karosseriefestes Teil ausgestaltet, und das Verbindungsteil befindet sich über der Radachse des Fahrzeugs. Man braucht beim Wechseln der Batterien nur die Batteriekästen vom karosseriefesten Bestandteil, nämlich dem Verbindungsteil abzutrennen, ohne das Verbindungsteil noch abbauen zu müssen.

Erfindungsgemäß weist das Verbindungsteil mindestens eine Durchführung zur Klimatisierung der Akkumulatorenbatterie auf. Die Durchführung wird zum Beispiel im Verbindungsteil in dessen axialen Richtung ausgestaltet. Dadurch kann ein Flüssigkeits- oder Luftstrom durch die Durchführung zwischen den Batteriekästen fließen, um die Akkumulatorenbatterie abzukühlen oder zu erwärmen.

Gemäß einer weiteren vorteilhaften Ausgestaltung der Erfindung können die Batteriekästen jeweils zum Verbindungsteil seitlich nebeneinander und/oder übereinander angeordnet werden. Dabei können die Batteriekästen auch flexibel unter oder hinter einem Autositz, insbesondere am Heckteil des Kraftfahrzeugs angeordnet werden.

Weiterhin wird in Verfahren zur Anordnung eines Energiespeichers für ein Kraftfahrzeug, insbesondere ein Elektrofahrzeug, mit zumindest zwei Batteriekästen, die jeweils eine Akkumulatorenbatterie aufnehmen, angegeben, bei dem eine elektrische Verbindung zwischen den zwei Akkumulatorenbatterien ausgebildet wird, wenn die Batteriekästen durch ein Verbindungsteil miteinander mechanisch verbunden werden, wobei mindestens ein erster Batteriekasten vom Verbindungsteil derart trennbar verbunden wird, dass die Batteriekästen unabhängig voneinander montiert und/oder demontiert werden können, bei dem das Verbindungsteil neben einer oder über einer Radachse des Kraftfahrzeugs angeordnet wird und mindestens eine Durchführung zur Klimatisierung der Akkumulatorenbatterie bei dem Verbindungsteil vorgesehen wird. Nachfolgend wird die Erfindung anhand der in den Figuren dargestellten Ausführungsbeispiele näher beschrieben und erläutert.

Es zeigen:
- FIG 1: Energiespeicheranordnung mit zwei Batteriekästen,
- FIG 2: eine Kopplungsmöglichkeit einer dreiteiligen Energiespeicheranordnung,
- FIG 3: eine andere Kopplungsmöglichkeit der dreiteiligen Energiespeicheranordnung,
- FIG 4: eine Kopplungsmöglichkeit einer zweiteiligen Energiespeicheranordnung, und
- FIG 5: eine andere Kopplungsmöglichkeit der zweiteiligen Energiespeicheranordnung.

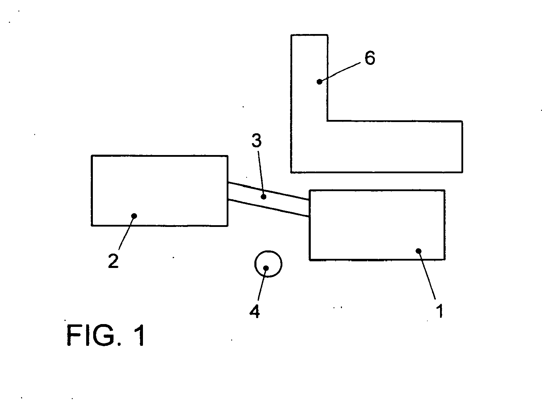

In FIG 1 wird dargestellt, dass eine Energiespeicheranordnuhg zwei Batteriekästen 1,2 aufweist, wobei jeder Batteriekasten zumindest eine Akkumulatorenbatterie (hier nicht gezeigt) für ein Elektro- oder Hybridfahrzeug umfasst. Die zwei Batteriekästen 1,2 werden jeweils seitlich zu der hinteren Radachse 4 des Fahrzeugs angeordnet, wobei einer der Batteriekästen 1 unter einem Autositz 6 und vor der Radachse 4 ist, während der andere Batteriekasten 2 neben dem Autositz 6, also im Kofferraum des Fahrzeugs, und hinter der Radachse 4 ist. Die Radachse 4 kann zum Beispiel eine Verbundlenkachse, eine Koppellenkerachse oder eine Mehrlenkachse sein.

Die zwei Batteriekästen 1,2 werden durch ein Verbindungsteil 3 verbunden, wobei das Verbindungsteil 3 sich oberhalb der Radachse 4 befindet. In einem anderen Fall kann das Verbindungsteil 3 je nach der Konstruktion der Batteriekästen 1,2 auch seitlich neben der Radachse 4 angeordnet werden. Das Verbindungsteil 3 besteht aus einem elastischen Material, zum Beispiel Kunststoff oder Gummi, und ist somit flexibel biegbar. Das Verbindungsteil 3 weist eine Durchführung (nicht dargestellt) in seiner axialen Richtung. Durch die Durchführung kann ein Luft- oder Wasserstrom durch die zwei Batteriekästen 1,2 oder zyklisch zwischen den Batteriekästen 1,2 fließen, um die Akkumulatorenbatterien zu kühlen oder zu wärmen. Das Verbindungsteil 3 kann ein oder mehrere Schnapp-/Rastelemente zur Ausbildung einer mechanischen Verbindung der Batteriekästen 1,2 und mindest einen Steckeranschluss zur Ausbildung einer elektrischen Verbindung für die Akkumulatorenbatterien aufweisen. Dadurch können die Batteriekästen 1,2 einfach durch Einrasten mit dem Verbindungsteil 3 verbunden und nach außen gegen Feuchtigkeit und Staub abgedichtet werden, ohne andere Befestigungsmittel wie zum Beispiel Schrauben oder Niete zu verwenden. Die Akkumulatorenbatterien können gleich nach dem Einrasten der Batteriekästen 1,2 ins Verbindungsteil 3 miteinander elektrisch verbunden sein.

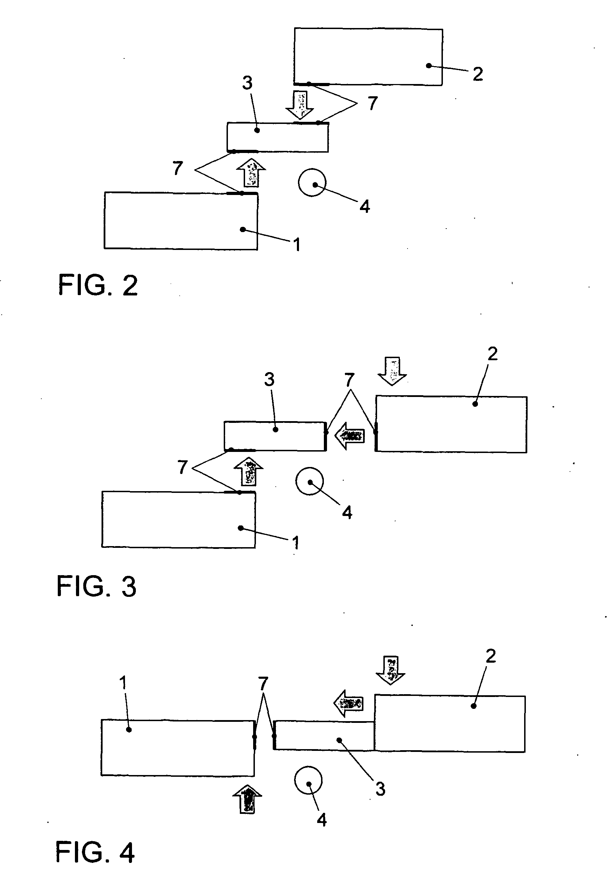

In FIG 2 und FIG 3 werden zwei Kopplungsmöglichkeiten einer dreiteiligen Energiespeicheranordnung angezeigt, wobei die zwei Batteriekästen 1,2 und das Verbindungsteil 3 jeweils einen Anschluss 7 aufweisen, um miteinander einrastend verbunden werden zu können. Die Batteriekästen 1,2 können jeweils seitlich, von oben oder von unten zu dem Verbindungsteil 3 angeordnet werden. Dabei kann der Batteriekasten 1, der unterhalb eines hinteren Autositzes 6 ist, von oben auf dem Verbindungsteil 3 aufgesetzt, von unten in das Verbindungsteil 3 hochgedrückt oder seitlich in das Verbindungsteil 3 eingeschoben werden, dementsprechend kann der zweite Batteriekasten 2, der am Heckteil des Fahrzeugs abgesetzt ist, sich auf der gleichen Weise an das Verbindungsteil 3 angeschlossen werden.

Das Verbindungsteil 3 kann als ein karosseriefestes Teil ausgestaltet und über der Radachse 4 angeordnet werden. Man braucht beim Wechseln der Batterien nur die Batteriekästen 1,2 von dem Fahrzeugkarosserie abzubauen, ohne das Verbindungsteil 3 noch herauszunehmen. Unabhängig voneinander und von der Radachse 4 können die zwei Batteriekästen 1,2 flexibel am Verbindungsteil 3 aufgebaut und von diesem abgebaut werden.

FIG 4 zeigt eine Kopplungsmöglichkeit einer zweiteiligen Energiespeicheranordnung, wobei der Batteriekasten 2, der im Kofferraum des Fahrzeugs ist, mit dem Verbindungsteil 3 als eine Einheit einstückig ausgestaltet wird. Der Batteriekasten 1 und der Batteriekasten 2 mit dem Verbindungsteil 3 können unabhängig von der Radachse 4 flexibel montiert und demontiert werden, indem der Batteriekasten 2 und das Verbindungsteil 3 als eine Einheit zuerst von oben bis zu einer Anschlagsposition oberhalb der Radachse 4 aufgelegt und dann parallel und quer zu der Radachse 4 verschoben wird. Der Batteriekasten 1 kann wie oben dargestellt seitlich, von oben oder von unten an das Verbindungsteil 3 angeordnet werden.

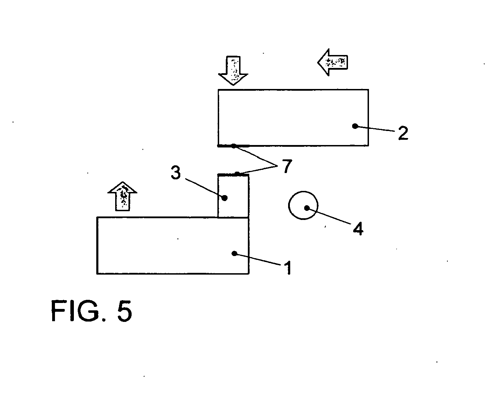

FIG 5 zeigt eine alternative Kopplungsmöglichkeit einer zweiteiligen Energiespeicheranordnung, wobei der Batteriekasten 1, der sich unter einem Autositz des Fahrzeugs befindet, und das Verbindungsteil 3 als eine Einheit einstückig ausgestaltet werden. So kann der Batteriekasten 2 zuerst von oben bis zu einer Anschlagsposition oberhalb der Radachse 4 aufgelegt und dann parallel und quer zu der Radachse 4 an eine passende Stelle verschoben werden. Der Batteriekasten 1 und das Verbindungsteil 3 werden als eine Einheit zur Verbindung mit dem Batteriekasten 2 von unten bis zu einer Position seitlich zu der Radachse 4 erhoben, wobei das Verbindungsteil 3 mittels dessen Anschlusses 7 an den Anschluss des Batteriekastens 2 angeschlossen wird.

Die zwei Batteriekästen 1,2 und das Verbindungsteil 3 können ohne Einfluss auf die Radachse 4 zusammengebaut und abgebaut werden. Der zweiteilige Aufbau der Energiespeicheranordnung bildet im zusammengesetzten Zustand eine für sich geschlossene Einheit, wobei die Einheit nur ein Batteriemanagement benötigt. Mit diesem Aufbau kann eine hohe Flexibilität bei der Wartung bzw. Instandhaltung der Batterien geschafft werden, damit die Batteriekästen 1,2 unabhängig voneinander getäuscht werden können, ohne dass die Radachse 4 vorab abgebaut werden muss.

## Patentansprüche

1. Energiespeicheranordnung für ein Kraftfahrzeug, insbesondere ein Elektrofahrzeug, mit zumindest zwei Batteriekästen (1,2), die jeweils mindestens eine Akkumulatorenbatterie aufnehmen, wobei eine elektrische Verbindung zwischen den zwei Akkumulatorenbatterien ausgebildet wird, wenn die Batteriekästen (1,2) über ein Verbindungsteil (3) miteinander mechanisch verbunden sind, wobei mindestens ein erster Batteriekasten (1) vom Verbindungsteil (3) trennbar derart ausgestaltet ist, dass die Batteriekästen (1,2) unabhängig voneinander montierbar und/oder demontierbar sind, wobei das Verbindungsteil (3) neben einer oder über einer Radachse (4) des Kraftfahrzeugs anordenbar ist, **dadurch gekennzeichnet, dass** das Verbindungsteil (3) mindestens eine Durchführung zur Klimatisierung der Akkumulatorenbatterie aufweist.

2. Energiespeicheranordnung nach Anspruch 1, **dadurch gekennzeichnet, dass** das Verbindungsteil (3) flexibel biegbar ausgestaltet ist.

3. Energiespeicheranordnung nach einem der Ansprüche 1 oder 2, **dadurch gekennzeichnet, dass** ein zweiter Batteriekasten (2) mit dem Verbindungsteil (3) fest ausgestaltet ist.

4. Energiespeicheranordnung nach einem der Ansprüche 1 oder 2, **dadurch gekennzeichnet,** das das Verbindungsteil (3) als ein karosseriefestes Teil ausgestaltet ist.

5. Energiespeicheranordnung nach einem der vorherigen Ansprüche, **dadurch gekennzeichnet, dass** die Batteriekästen (1,2) jeweils zum Verbindungsteil (3) seitlich nebeneinander und/oder übereinander angeordnet sind.

6. Energiespeicheranordnung nach einem der vorstehenden Ansprüche, **dadurch gekennzeichnet, dass** einer der Batteriekästen (1) unter einem Autositz (8) des Kraftfahrzeugs anordenbar ist, oder einer der Batteriekasten (2) hinter dem Autositz (6) am Heckteil des Kraftfahrzeugs anordenbar ist.

7. Verfahren zur Anordnung eines Energiespeichers für ein Kraftfahrzeug, insbesondere ein Elektrofahrzeug, mit zumindest zwei Batteriekästen (1,2), die jeweils eine Akkumulatorenbatterie aufnehmen, bei dem
- eine elektrische Verbindung zwischen den zwei Akkumulatorenbatterien ausgebildet wird, wenn die Batteriekästen (1,2) durch ein Verbindungsteil (3) miteinander mechanisch verbunden werden, wobei mindestens ein erster Batteriekasten (1) vom Verbindungsteil (3) derart trennbar verbunden wird, dass die Batteriekästen (1,2) unabhängig voneinander montiert und/oder demontiert werden können und das Verbindungsteil (3) neben einer oder über einer Radachse (4) des Kraftfahrzeugs angeordnet wird, **dadurch gekennzeichnet, dass** mindestens eine Durchführung zur Klimatisierung der Akkumulatorenbatterie bei dem Verbindungsteil (4) vorgesehen wird.

8. Verfahren nach Anspruch 7, bei dem ein zweiter Batteriekasten (2) mit dem Verbindungsteil (3) fest ausgestaltet wird.

9. Verfahren nach einem der Ansprüche 7, bei dem das Verbindungsteil (3) karosseriefest mit dem Kraftfahrzeug ausgestaltet ist.

10. Verfahren nach einem der Ansprüche 7 bis 9, bei dem die Batteriekästen (1,2) jeweils zum Verbindungsteil (3) seitlich nebeneinander und/oder übereinander angeordnet werden.

11. Verfahren nach einem der Ansprüche 7 bis 10, bei dem einer der Batteriekästen (1) unter einem Autositz (6) des Kraftfahrzeugs angeordnet wird, oder einer der Batteriekästen (2) hinter dem Autositz (6) am Heckteil des Kraftfahrzeugs angeordnet wird.

## Claims

1. Energy storage arrangement for a motor vehicle, in particular an electric vehicle, having at least two battery boxes (1, 2) which each accommodate at least one accumulator battery, wherein an electrical connection is formed between the two accumulator batteries when the battery boxes (1, 2) are mechanically connected to one another by means of a connecting part (3), wherein at least a first battery box (1) is designed, such that it can be disconnected from the connecting part (3), in such a way that the battery boxes (1, 2) can be fitted and/or removed independently of one another, wherein the connecting part (3) can be arranged next to a or above a wheel axle (4) of the motor vehicle, **characterized in that** the connecting part (3) has at least one aperture for controlling the climate of the accumulator battery.

2. Energy storage arrangement according to Claim 1, **characterized in that** the connecting part (3) is designed such that it can be bent in a flexible manner.

3. Energy storage arrangement according to either of Claims 1 and 2, **characterized in that** a second battery box (2) is designed to be fixed to the connecting part (3).

4. Energy storage arrangement according to either of Claims 1 and 2, **characterized in that** the connecting part (3) is designed as a part which is fixed to the vehicle body.

5. Energy storage arrangement according to one of the preceding claims, **characterized in that** the battery boxes (1, 2) are each arranged laterally next to one another and/or one above the other in relation to the connecting part (3).

6. Energy storage arrangement according to one of the preceding claims, **characterized in that** one of the battery boxes (1) can be arranged beneath a car seat (6) of the motor vehicle, or one of the battery boxes (2) can be arranged behind the car seat (6) on the rear part of the motor vehicle.

7. Method for arranging an energy storage means for a motor vehicle, in particular an electric vehicle, having at least two battery boxes (1, 2) which each accommodate an accumulator battery, in which method
- an electrical connection is formed between the two accumulator batteries when the battery boxes (1, 2) are mechanically connected to one another by a connecting part (3), wherein at least a first battery box (1) is connected, such that it can be disconnected from the connecting part (3), in such a way that the battery boxes (1, 2) can be fitted and/or removed independently of one another and the connecting part (3) is arranged next to a or above a wheel axle (4) of the motor vehicle, **characterized in that** at least one aperture for controlling the climate of the accumulator battery is provided in the connecting part (3).

8. Method according to Claim 7, in which a second battery box (2) is designed to be fixed to the connecting part (3).

9. Method according to Claim 7, in which the connecting part (3) is designed to be fixed to the motor-vehicle body.

10. Method according to one of Claims 7 to 9, in which the battery boxes (1, 2) are each arranged laterally next to one another and/or one above the other in relation to the connecting part (3). -

11. Method according to one of Claims 7 to 10, in which one of the battery boxes (1) is arranged beneath a car seat (6) of the motor vehicle, or one of the battery boxes (2) is arranged behind the car seat (6) on the rear part of the motor vehicle.

## Revendications

1. Agencement d'accumulateurs d'énergie pour un véhicule automobile, en particulier un véhicule électrique, comprenant au moins deux compartiments de batterie (1, 2), qui reçoivent chacun au moins une batterie d'accumulateurs, une liaison électrique entre les deux batteries d'accumulateurs étant établie lorsque les compartiments de batterie (1, 2) sont reliés mécaniquement l'un à l'autre par le biais d'une partie de liaison (3), au moins un premier compartiment de batterie (1) étant configuré de manière séparable de la partie de liaison (3), de telle sorte que les compartiments de batterie (1, 2) puissent être montés et/ou démontés indépendamment l'un de l'autre, la partie de liaison (3) pouvant être disposée à côté ou au-dessus d'un axe de roue (4) du véhicule automobile, **caractérisé en ce que** la partie de liaison (3) présente au moins un passage pour la climatisation de la batterie d'accumulateurs.

2. Agencement d'accumulateurs d'énergie selon la revendication 1, **caractérisé en ce que** la partie de liaison (3) est configurée de manière élastiquement flexible.

3. Agencement d'accumulateurs d'énergie selon l'une quelconque des revendications 1 ou 2, **caractérisé en ce qu'**un deuxième compartiment de batterie (2) est configuré fixement avec la partie de liaison (3).

4. Agencement d'accumulateurs d'énergie selon l'une quelconque des revendications 1 ou 2, **caractérisé en ce que** la partie de liaison (3) est configurée sous forme de partie fixée à la carrosserie.

5. Agencement d'accumulateurs d'énergie selon l'une quelconque des revendications précédentes, **caractérisé en ce que** les compartiments de batterie (1, 2) sont disposés à chaque fois l'un à côté de l'autre et/ou l'un au-dessus de l'autre latéralement par rapport à la partie de liaison (3).

6. Agencement d'accumulateurs d'énergie selon l'une quelconque des revendications précédentes, **caractérisé en ce que** l'un des compartiments de batterie (1) peut être disposé sous un siège de l'automobile (6) du véhicule automobile, ou l'un des compartiments de batterie (2) peut être disposé derrière le siège de l'automobile (6) au niveau de la partie arrière du véhicule, automobile.

7. Procédé pour disposer un accumulateur d'énergie pour un véhicule automobile, en particulier un véhicule électrique, comprenant au moins deux compartiments de batterie (1, 2), qui reçoivent chacun une batterie d'accumulateurs, dans lequel
- une liaison électrique est établie entre les deux batteries d'accumulateurs, lorsque les compartiments de batterie (1, 2) sont reliés mécaniquement l'un à l'autre par une partie de liaison (3), au moins un premier compartiment de batterie (1) étant connecté de manière séparable à la partie de liaison (3), de telle sorte que les compartiments de batterie (1, 2) puissent être montés et/ou démontés indépendamment l'un de l'autre et la partie de liaison (3) est disposée à côté ou au-dessus d'un axe de roue (4) du véhicule automobile, **caractérisé en ce qu'**au moins un passage est prévu pour la climatisation de la batterie d'accumulateurs au niveau de la partie de liaison (3).

8. Procédé selon la revendication 7, dans lequel un deuxième compartiment de batterie (2) est configuré fixement avec la partie de liaison (3).

9. Procédé selon la revendication 7, dans lequel la partie de liaison (3) est configurée de manière fixée à la carrosserie du véhicule automobile.

10. Procédé selon l'une quelconque des revendications 7 à 9, dans lequel les compartiments de batterie (1, 2) sont à chaque fois disposés l'un à côté de l'autre et/ou l'un au-dessus de l'autre latéralement par rapport à la partie de liaison (3).

11. Procédé selon l'une quelconque des revendications 7 à 10, dans lequel l'un des compartiments de batterie (2) est disposé sous un siège de l'automobile (6) du véhicule automobile ou l'un des compartiments de batterie (2) est disposé derrière le siège de l'automobile (6) sur la partie arrière du véhicule automobile.
